# EUROPEAN PATENT SPECIFICATION

(11) **EP 2 141 047 B1**
(45) Date of publication and mention of the grant of the patent: **29.08.2012**
(21) Application number: 08752001.1
(22) Date of filing: 24.04.2008
(51) Int. Cl.: B60N 2/02, B60N 2/48

(54) **HEAD REST POSITION ADJUSTING APPARATUS AND HEAD REST POSITION ADJUSTING METHOD**
VORRICHTUNG ZUR EINSTELLUNG EINER KOPFRUHEPOSITION UND VERFAHREN ZUR EINSTELLUNG EINER KOPFRUHEPOSITION
APPAREIL ET PROCÉDÉ D'AJUSTEMENT DE POSITION DE REPOS DE LA TÊTE

(30) Priority: 24.04.2007 JP 2007113821; 25.12.2007 JP 2007331510
(43) Date of publication of application: 06.01.2010
(73) Proprietor: Fujikura, Ltd., Tokyo 135-8512 (JP)
(72) Inventor: YAMAGUCHI, Yuichiro, Sakura-shi Chiba 285-8550 (JP)
(74) Representative: Grünecker, Kinkeldey, Stockmair & Schwanhäusser
(86) International application number: PCT/JP2008/057902
(87) International publication number: WO 2008/133291

(56) References cited:
- EP-A2- 0 976 625
- EP-A2- 1 857 318
- JP-A- 01 011 511
- JP-A- 01 011 511
- JP-A- 01 011 512
- JP-A- 01 011 512
- JP-A- 08 015 347
- JP-A- 11 169 258
- JP-A- 2001 100 907
- JP-B2- 3 347 069
- US-B1- 6 310 407

## Description

### Technical Field

The present invention relates to a head restraint position adjusting device and a head restraint position adjusting method which adjust a position of a head restraint attached to a seat of a vehicle like an automobile, and more specifically, a head restraint position adjusting device and a head restraint position adjusting method which automatically adjust a position of the head restraint to a comfortable position, (see, for example, JP 11 169 258 A, corresponding to the preamble of independent product claim 1).

### Background Art

Conventionally, there are devices which adjust a position of a head restraint attached to a seat of a vehicle like an automobile. That is, JP 2007-30676A (hereafter called patent literature discloses a vehicular head restraint device that comprises an ECU which compares an amount of change in a capacitance detected by a capacitance sensor with a threshold set beforehand when a front portion of a head restraint is moved in a direction of fully-open position, and which determines that the front portion of the head restraint is moved closer to a head of a driver/passenger (human body) when the amount of change is greater than the threshold.

The ECU detects a change in capacitance per unit displacement of the capacitance sensor at a predetermined timing, changes the threshold based on a detection result, changes the threshold at a regular time interval, or changes the threshold based on a drive voltage for a motor. Accordingly, the ECU precisely detect that the front portion of the head restraint is moved close to the head of the driver/passenger.

JP 2000-309242A (hereafter called Patent literature 2) discloses a device for adjusting a head restraint. Such a device comprises a sensor including two capacitor plates which are for detecting a position of a head of a driver/passenger, and which are arranged inside the head restraint. The two capacitor plates are arranged in the vertical direction inside the head restraint.

As far as a sensor signal (detection signal) from one capacitor plate increases while at the same a sensor signal from another capacitor plate decreases, a position of the head restraint in height is adjusted in such a manner as to be changed from a home position where the head restraint is retracted.

JP 564-11512A (hereafter called Patent literature 3) discloses a head restraint driving device that comprises support means for movably supporting a head restraint, drive means for reciprocatingly driving the head restraint, plural detection electrodes which are spaced apart one another inside a portion of an external cover of the head restraint supporting a head, capacitance detection means for detecting a capacitance formed by the plural detection electrodes relative to a common potential line, and position control means for controlling the drive means to move the head restraint in a direction in which the capacitance is balanced.

The head restraint is driven in such a way that the head is located at a center of the plural detection electrodes, in other words, the head restraint is moved in accordance with a motion of the head, and then a position of the head restraint is automatically adjusted.

JP H11-180200A (hereafter called Patent literature 4) discloses a head restraint adjusting device that comprises a head restraint movable in the vertical direction by a motor and arranged on the top of a seat back (backrest), a head detection sensor which detects a position of a head of a user (driver/passenger) sitting down a seat, and a CPU which adjust a height of the head restraint in accordance with a position of the head of the user sitting down the seat based on a signal from the head detection sensor.

When the CPU detects that an ignition switch is turned on, a seating detection sensor detects that the user is seated, and a seatbelt buckle switch detects that a seat belt is fastened, an operation of adjusting the head restraint is started.

Patent Literature 1: JP2007-30676A
Patent Literature 2: JP2000-309242A
Patent Literature 3: JPS64-11512A
Patent Literature 4: JPH11-180200A

### Disclosure of Invention

### Problem to be Solved by the Invention

According to the vehicular head restraint device disclosed in patent literature 1 or the device for adjusting the head restraint disclosed in patent literature 2, however, a capacitance between the head and the detection electrode is measured and the measurement result is used for adjusting the position using one capacitance sensor in the case of the former device and two or three capacitor plates in the case of the latter device.

According to the head restraint driving device disclosed in patent literature 3 or the head restraint adjusting device disclosed in patent literature 4, the position of the head restraint is adjusted based on a capacitance between the head restraint and a roof or the like of the vehicle in the case of the former device, and based on an adjustment result of each part of the seat in the case of the latter device.

Accordingly, it is necessary to detect a center of the head while comparing an output balance of a sensor and an output peak of each detection electrode. This kind of detection fashion requires a detection operation of moving the head restraint having the detection electrode thereinside from bottom to top in the height direction to scan such a movement, and of specifying a position where an output of the sensor is balanced or of detecting an output peak of each detection electrode. Therefore, it is difficult to carry out position adjustment highly precisely within a short time.

In particular, according to the foregoing detection fashion, it is not considered that a factor other than a shape of the head may cause an output fluctuation as the head moves while the position thereof is being detected. Accordingly, it takes a certain amount of adjustment time to carry out position adjustment highly precisely, so that position adjustment cannot be carried out within a short time.

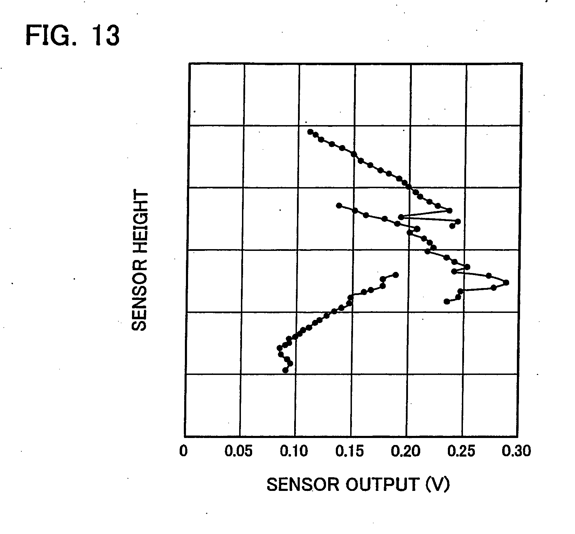

As an example, FIG. 13 shows a detection result of a sensor output in a test carried out by the applicant of the present invention when a head restraint was provided with a capacitance sensor with a user being sitting down a seat. In FIG. 13, tests were carried out for three kinds of head restraint having a detection electrode at a bottom portion, a center, and an upper portion, respectively. Note that the vertical axis in FIG. 13 represents a distance (height of sensor) from a center of the detection electrode to a top of the seat, while the horizontal axis represents a sensor output at each detection position. A distance between the head of the user and the head restraint was maintained to 20 mm, and the tests were carried out while the user came to rest as much as possible.

As a result, as is clear from FIG. 13, a sensor output hardly became stabilized, and it can be expected that an output has a further unstable behavior in a riding condition at a normal time. Based on the test results, it becomes clear that adjusting a position of the head restraint highly precisely by carrying out the detection operation in the foregoing detection fashion requires an adjustment time, and is difficult to carry out.

The present invention has been made in view of the foregoing circumstance, and it is an object of the present invention to provide a head restraint position adjusting device and a head restraint position adjusting method which can automatically adjust a position of a head restraint highly precisely within a short time.

### Means for Solving the Problem

The aforementioned problems are solved by a head restraint adjusting device according to claim 1 and a head restraint position adjusting method according to claim 11. Further more advantageous means are defined in the dependent claims.
A head restraint position adjusting device according to an aspect of the present invention as defined in claim 1, as just mentioned, comprises: a plurality of detection electrodes arranged side by side in a line along a height direction of a head restraint attached to a seat of a vehicle, and each configured such that a capacitance between a head of a human body sitting down the seat and the head restraint may be detected; a detection circuit configured to detect a reference position of the head in the height direction based on detection signals from the plurality of respective detection electrodes; and position adjusting means for adjusting a position of the head restraint relative to the seat with reference to the reference position of the head in the height direction in accordance with a detection result of the detection circuit, and the plurality of detection electrodes being provided by what corresponds to a number required for detecting the reference position of the head in the height direction with the head restraint being at a standstill.

The head restraint position adjusting device of the present invention having the foregoing configuration can automatically and appropriately adjust a position of the head restraint relative to the seat with reference to the reference position of the head in the height direction. Accordingly, it is possible to adjust a position of the head restraint highly precisely within a short time. Moreover, because a position of the head restraint relative to the seat is automatically adjusted, it is possible to suppress any accident like cervical spine injury of a driver/passenger when the vehicle collides under a condition in which a position of the head restraint is not adjusted.

The detection circuit may detect, for example, an estimated center position of the head in the height direction as the reference position, and the position adjusting means may adjust a position of the head restraint relative to the seat with reference to the estimated center position of the head in the height direction. This enables appropriate and automatic adjustment of a position of the head restraint relative to the seat with reference to the estimated center position of the head in the height direction.

The detection circuit may detect, as the reference position, the detection electrode having a detection signal with the highest output among the plurality of detection electrodes, and the position adjusting means may adjust a position of the head restraint relative to the seat so that the detection electrode having the detection signal with the highest output and detected by the detection circuit is located above a center position of the head restraint in the height direction. This enables appropriate and automatic adjustment of a position of the head restraint relative to the seat so that the detected detection electrode having the detection signal with the highest output is located above the center position of the head restraint in the height direction.

The plurality of detection electrodes may be each formed in a rectangular strip having a long side arranged in a width direction intersecting with the height direction of the head restraint at a front face side of the head restraint.

The plurality of detection electrodes may be arranged across the entire area of the head restraint in the height direction at an equal interval.

The plurality of detection electrodes may be arranged in the height direction of the head restraint at an equal interval for example, and a detection electrode group comprised of the plurality of detection electrodes may be so arranged as to be shifted as a whole in the height direction so that the detection electrode arranged in the vicinity of a center of the detection electrode group in the height direction is detected by the detection circuit as the detection electrode having a detection signal with the highest output.

The plurality of detection electrodes may be each formed in a rectangular strip having a long side in a width direction intersecting with the height direction of the head restraint along a front face thereof, and are arranged on the front face side of the head restraint.

At least five detection electrodes may be provided on a front face side of the head restraint.

The detection circuit may comprise: a plurality of capacitance detection circuits connected to the plurality of respective detection electrodes one by one, and each configured to output information indicating a capacitance detected by each detection electrode; and an arithmetic processing circuit configured to compare values of capacitances based on plural pieces of information from the plurality of respective capacitance detection circuits, calculate the reference position or detect the detection electrode having the largest detected capacitance, and output drive information for the head restraint to the position adjusting means in accordance with calculation result information or a detection result.

For example, the detection circuit may comprise: a time-sharing circuit connected to the plurality of detection electrodes; a capacitance detection circuit configured to output information indicating a capacitance detected by each of the plurality of detection electrodes through the time-sharing circuit in a different time; and an arithmetic processing circuit configured to compare values of capacitance based on plural pieces of information from the capacitance detection circuit, calculate the reference position or detect the detection electrode having the largest detected capacitance, and output drive information for the head restraint to the position adjusting means in accordance with calculation result information or a detection result.

A head restraint position adjusting method according to another aspect of the present invention as defined in claim 11, as mentioned above, comprises: detecting a capacitance between a head of a human body sitting down a seat of a vehicle and a head restraint attached to the seat through a plurality of detection electrodes arranged side by side in a line in the head restraint along a height direction of the head restraint, the plurality of detection electrodes being provided by what corresponds to a number required for detecting a reference position of the head of the human body sitting down the seat in the height direction with the head restraint being at a standstill; detecting the reference position of the head in the height direction based on detection signals each indicating a detected capacitance and output by each of the plurality of detection electrodes; and adjusting a position of the head restraint relative to the seat with reference to the detected reference position of the head in the height direction.

The head restraint position adjusting device of the present invention having the foregoing configuration can automatically and appropriately adjust a position of the head restraint from a standstill condition relative to the seat with reference to the reference position of the head in the height direction, thereby adjusting a position of the head restraint highly precisely within a short time. Moreover, because a position of the head restraint relative to the seat is automatically adjusted, it is possible to suppress any accident like cervical spine injury of a driver/passenger when the vehicle collides under a condition in which a position of the head restraint is not adjusted.

The head restraint position adjusting method may further comprise: detecting an estimated center position of the head in the height direction as the reference position based on, for example the detection signals; and adjusting a position of the head restraint relative to the seat with reference to the detected estimated center position of the head in the height direction.

The head restraint position adjusting method may further comprise: detecting the detection electrode having the detection signal with the highest output among the plurality of detection electrodes based on, for example, the detection signals; and adjusting a position of the head restraint relative to the seat so that the detected detection electrode having the detection signal with the highest output is located above a center position of the head restraint in the height direction.

### Effect of the Invention

According to the present invention, it is possible to provide a head restraint position adjusting device and a head restraint position adjusting method which appropriately and automatically adjust a position of the head restraint relative to the seat from a standstill condition with reference to the reference position of the head in the height direction, thereby adjusting a position of the head restraint highly precisely within a short time.

### Best Mode for Carrying Out the Invention

An explanation will be given of a preferred embodiment for a head restraint position adjusting device and a head restraint position adjusting method of the present invention in detail with reference to the accompanying drawings.

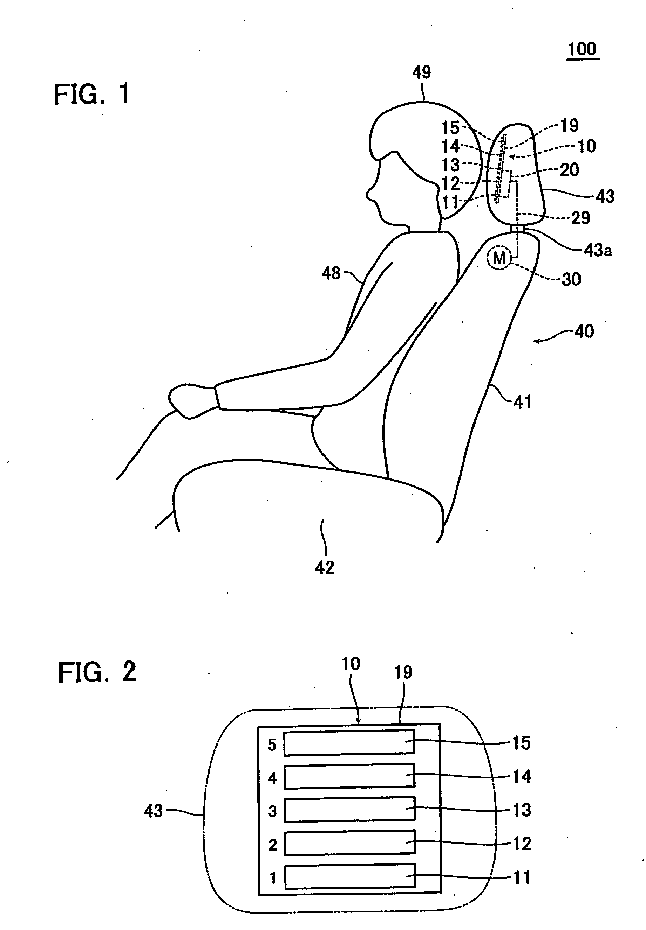

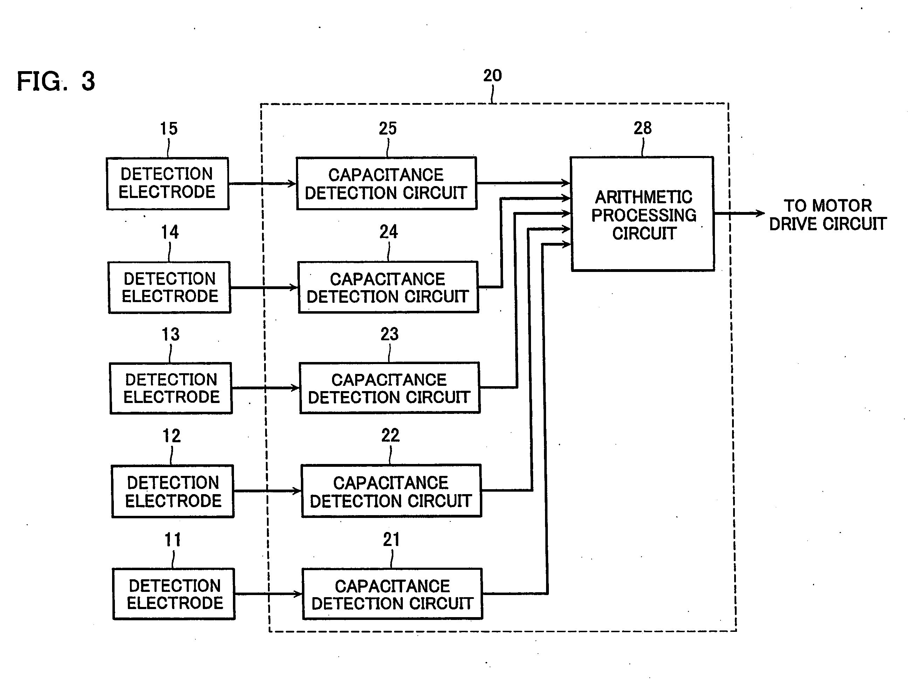

FIG. 1 is a schematic diagram showing an example of a seat in a vehicle provided with a head restraint position adjusting device according to a first embodiment of the present invention. FIG. 2 is an explanatory diagram showing an example arrangement of a part of the head restraint position adjusting device in a head restraint. FIG. 3 is a block diagram showing an example of a whole configuration of the head restraint position adjusting device.

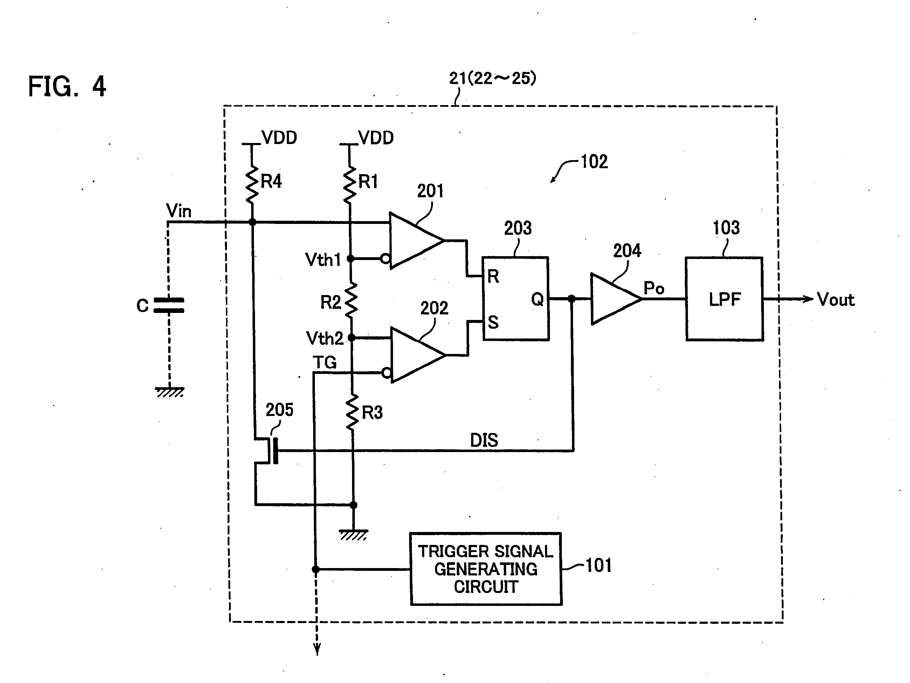

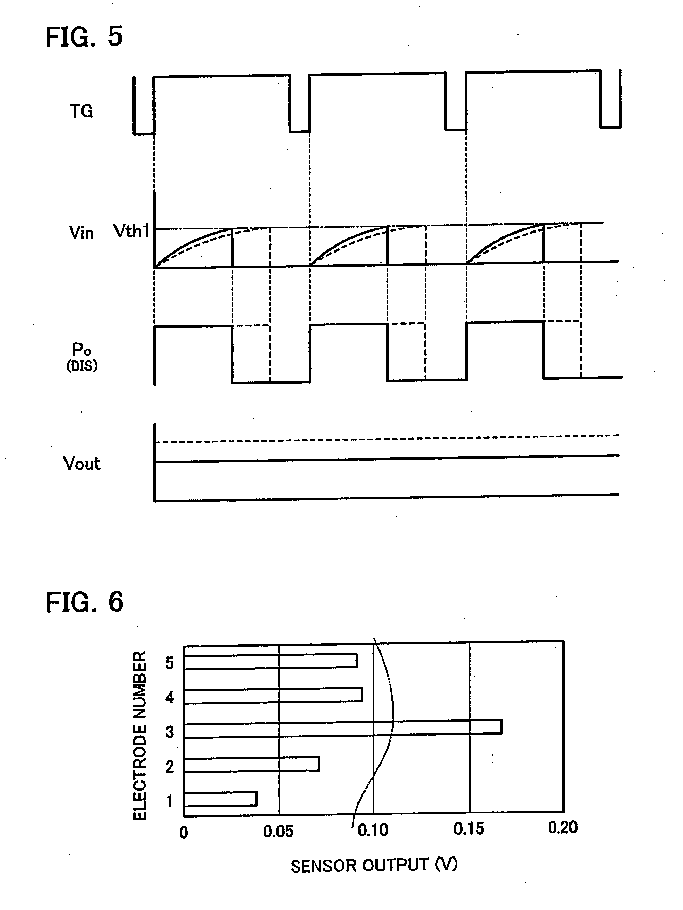

FIG. 4 is a block diagram showing an example configuration of a capacitance detection circuit of the head restraint position adjusting device. FIG. 5 is an operation waveform chart showing an example of an operation waveform of a detection circuit of the head restraint position adjusting device. FIG. 6 is an explanatory diagram showing an example of an output of a detection electrode of the head restraint position adjusting device.

As shown in FIGS. 1 and 2, a head restraint position adjusting device 100 is provided in a seat 40 of a vehicle and the like, and comprises, for example, a capacitance sensor unit 10 arranged in a head restraint 43 of the seat 40, and a drive motor unit 30 arranged in a backrest 41 of the seat 40. According to the head restraint position adjusting device 100 of the embodiment, the capacitance sensor unit 10 and the drive motor unit 30 are electrically connected together by, for example, a harness 29.

The capacitance sensor unit 10 comprises plural detection electrodes 11 to 15 formed on one face of a board 19, and a detection circuit 20 formed on another face of the board 19, and detects a head 49 of a human body 48 sitting down the seat 40. That is, the capacitance sensor unit 10 detects a capacitance between the head 49 of the human body 48 and the head restraint 43 (more specifically, detection electrodes 11 to 15).

The board 19 comprises, for example, a flexible printed board, a rigid board, or a rigid-flexible board. The plural detection electrodes 11 to 15 are formed of copper, a copper alloy, or aluminum formed and patterned on the board 19 formed of an insulating body such as polyethylene terephthalate (PET), polyethylene naphthalate (PEN), polyimide (PI), polyamide (PA), or an epoxy resin.

The plural detection electrodes 11 to 15 are each formed in a rectangular strip having a long side in a width direction intersecting with the height direction of the head restraint 43 (width direction intersecting with the height direction along the front face of the head restraint 43) at the front face side of the head restraint 43, and are arranged side by side in a line in such a way that the loner sides of the respective detection electrodes 11 to 15 are line up along the height direction of the head restraint 43.

For example, electrode number 1 to 5 are allocated to the plural detection electrodes 11 to 15. There are five detection electrodes 11 to 15 in the embodiment, but for example, equal to five or greater detection electrodes can be provided by what corresponds to the number necessary to detect a reference position of the head 49 of the human body 48 sitting down the seat 40 in the height direction with the head restraint 43 being at a standstill.

The detection circuit 20 detects an estimated center position of the head 49 in the height direction as, for example, a reference position in the embodiment based on detection signals from the plural detection electrodes 11 to 15. As shown in FIG. 3, the detection circuit 20 comprises plural capacitance detection circuits 21 to 25 which are connected to the plural detection electrodes 11 to 15, respectively, one by one, and which outputs information indicating a capacitance detected by each detection electrode 11 to 15, and an arithmetic processing circuit 28 which is connected to the capacitance detection circuits 21 to 25, compares values of capacitance based on information output by individual capacitance detection circuits, calculates an estimated center position of the head 49 in the height direction, and outputs calculation result information to a motor drive circuit (not shown) of the drive motor unit 30.

The plural capacitance detection circuits 21 to 25 each generates a pulse signal having a duty ratio changing in accordance with a capacitance between each detection electrode 11 to 15 and the head 49, and outputs such a signal having undergone smoothing as a detection signal. The arithmetic processing circuit 28 comprises a CPU, a RAM, a ROM, and the like, compares values of capacitance based on detection signals output by the individual capacitance detection circuits 21 to 25, detects an estimated center position of the head 49 in the height direction, and outputs a control signal (drive information) as information on the basis of a calculation result to the drive motor unit 30 which changes a position of the head restraint 43.

As shown in FIG. 4, each capacitance detection circuit 21 (22 to 25) changes a duty ratio in accordance with a capacitance C, and comprises, for example, a trigger signal generating circuit 101 which outputs a trigger signal TG with a constant period, a timer circuit 102 which outputs a pulse signal Po having a duty ratio changing in accordance with a largeness of the capacitance C connected to an input terminal, and a low-pass filter (LPF) 103 which performs smoothing on the pulse signal Po.

The timer circuit 102 comprises, for example, two comparators 201, 202, an RS flip-flop circuit (hereinafter, "RS-FF") 203 having a reset terminal R and a set terminal S into which outputs of the comparators 201, 202 are respectively input, a buffer 204 which outputs an output DIS of the RS-FF 203 to the LPF 103, and a transistor 205 which is turned on/off by the output DIS from the RS-FF 203.

The comparator 202 compares the trigger signal TG shown in FIG. 5 and output by the trigger signal generating circuit 101 with a prescribed threshold Vth2 divided by resistors R1, R2, and R3, and outputs a set pulse synchronized with the trigger signal TG. The set pulse sets an output Q of the RS-FF 203.

The output Q turns off the transistor 205 as the discharge signal DIS, and charges between the detection electrode 11 (12 to 15) and a ground at a speed defined by a time constant set by the capacitance C of each detection electrode 11 (12 to 15) and a resistor R4 connected between the input terminal and a power-supply line. Accordingly, a potential of an input signal Vin increases at a speed defined by the capacitance C.

If the input signal Vin becomes larger than a threshold Vth1 defined by the resistors R1, R2, and R3, an output of the comparator 201 is inverted, and an output of the RS-FF 203 is also inverted. As a result, the transistor 205 turns on, and a charge trapped in the detection electrode 11 (12 to 15) is discharged through the transistor 205.

Therefore, as shown in FIG. 5, the timer circuit 102 outputs the pulse signal Po which oscillates at a duty ratio based on the capacitance C between the detection electrode 11 (12 to 15) and the head 49 of the human body 48 which comes close thereto. The LPF 103 performs smoothing on this output, and outputs a direct-current detection signal Vout as shown in FIG. 5. Note that in FIG. 5, a waveform indicated by a solid line and a waveform indicated by a dotted line mean that the former has a larger capacitance than latter, and for example, the latter represents a condition in which an object comes close.

In the embodiment, the drive motor unit 30 comprises a motor drive circuit which controls a non-illustrated drive motor based on a control signal from the arithmetic processing circuit 28 that has calculated an estimated center position of the head 49 in the height direction based on the detection signal Vout from each capacitance detection circuit 21 to 25, and which changes a position of the head restraint 43 relative to the backrest 41 of the seat 40 with reference to the estimated center position of the head 49 in the height direction, and the drive motor which actually changes the position of the head restraint 43 under the control of the motor drive circuit.

In the first embodiment, the drive motor drives the head restraint 43 freely movable in the vertical direction (height direction) through a support axis 43a, but in addition, may drive the head restraint 43 freely movable right and left and back and forth which are directions intersecting with the vertical direction. Note that the estimated center position of the head 49 in the height direction which is the reference position is not always consistent with the center position of the head 49, so that the estimated center position is acquired as follow.

That is, according to the head restraint position adjusting device 100 having the foregoing configuration, for example, the capacitance C between each detection electrode 11 to 15 of the capacitance sensor unit 10 and the head 49 is detected in an initial condition (a condition in which the head restraint 43 is positioned at the closest position to the backrest 41), and the detection circuits 20 detects and compares peaks of respective such outputs one another, thereby acquiring the estimated center position of the head 49 in the height direction.

According to the tests carried out by the applicant of the present invention, in this case, an output (V) of each detection electrode 11 to 15 (electrode number 1 to 5) is as shown in FIG. 6. An output of the detection electrode 13 having the electrode number 3 is highest beyond 0.15 V, and an output of the detection electrode 11 having the electrode number 1 is lowest under 0.05 V. Accordingly, in this example, the detection circuit 20 determines that a position corresponding to the detection electrode 13 is the estimated center position of the head 49 in the height direction, and performs position adjustment by causing the drive motor unit 30 and the like to conform the center position of the head restraint 43 to the estimated center position.

Therefore, the head restraint position adjusting device 100 of the first embodiment can acquire an estimated center position of the head 49 in the height direction without moving the head restraint 43 in a movable range between top and bottom from an initial condition, and can arrange the head restraint 43 at the best position relative to the head 49 through just one moving operation of the head restraint 43 regarding a position adjustment. Accordingly, it is possible to suppress any accident like cervical spine injury of the human body 48 when a vehicle collides under a condition in which a position of the head restraint 43 is not adjusted.

Note that the capacitance sensor unit 10 and the drive motor unit 30 in the head restraint position adjusting device 100 are electrically connected together via the harness 29 in the embodiment, but the drive motor unit 30 may be remotely-controlled via a wireless device or the like. Moreover, the drive motor unit 30 may be built together with the capacitance sensor unit 10, and may be arranged in the head restraint 43.

The detection circuit 20 may profile the shape of the head 49 using the arithmetic processing circuit 28, calculate an estimated center position from a profiling result, and move the head restraint 43 based on this calculation result, in addition to just moving the center position of the head restraint 43 to the estimated center position. Further, the detection circuit 20 may conform an arbitrary position of the head restraint 43 to the estimated center position based on, for example, profile information on the human body 48 (containing information on the shape of the head 49) or information on the shape of the head restraint 43 itself stored beforehand.

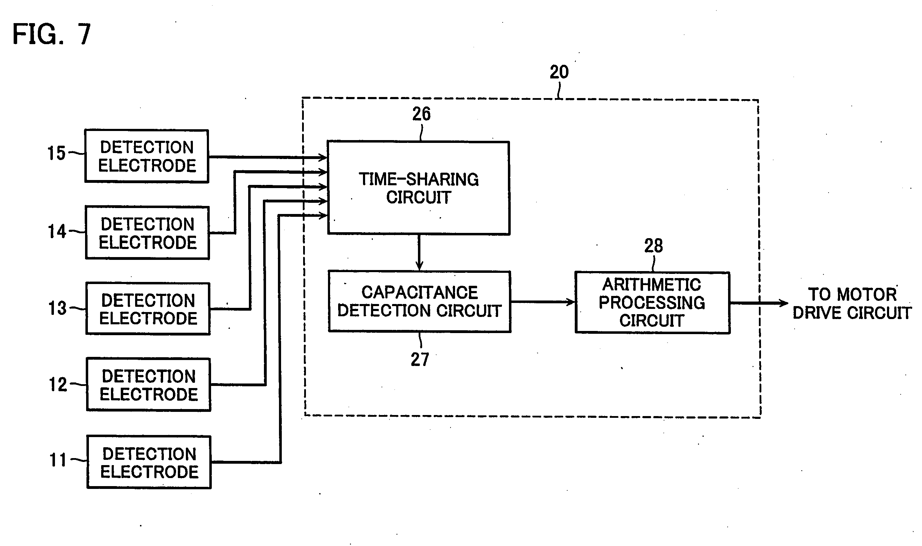

FIG. 7 is a block diagram showing another example of a whole configuration of the head restraint position adjusting device 100 of the first embodiment of the present invention. Elements duplicating with ones already explained will be denoted by the same reference numerals, explanations thereof will be omitted in some cases, and elements which do not particularly relate to the present invention will not be explained in some cases.

As shown in FIG. 7, the detection circuit 20 comprises a time-sharing circuit 26 connected to each of the detection electrodes 11 to 15, a capacitance detection circuit 27 which outputs information indicating a capacitance detected by the time-sharing circuit 26 through each detection electrode 11 to 15 in a different time, and an arithmetic processing circuit 28 which compares values of capacitance indicated by information output by the capacitance detection circuit 27, calculates an estimated center position or the like of the head 49 in the height direction, and outputs a calculation result to the motor drive circuit of the drive motor unit 30.

According to such a configuration of the detection circuit 20, it becomes possible to scan capacitances by individual detection electrodes 11 to 15 in turns through the time-sharing circuit 26, and to acquire the estimated center position of the head 49 in the height direction as a reference position based on a scanning result. Therefore, using the detection circuit 20 with such a configuration also makes it possible to adjust a position of the head restraint 43 highly precisely within a short time.

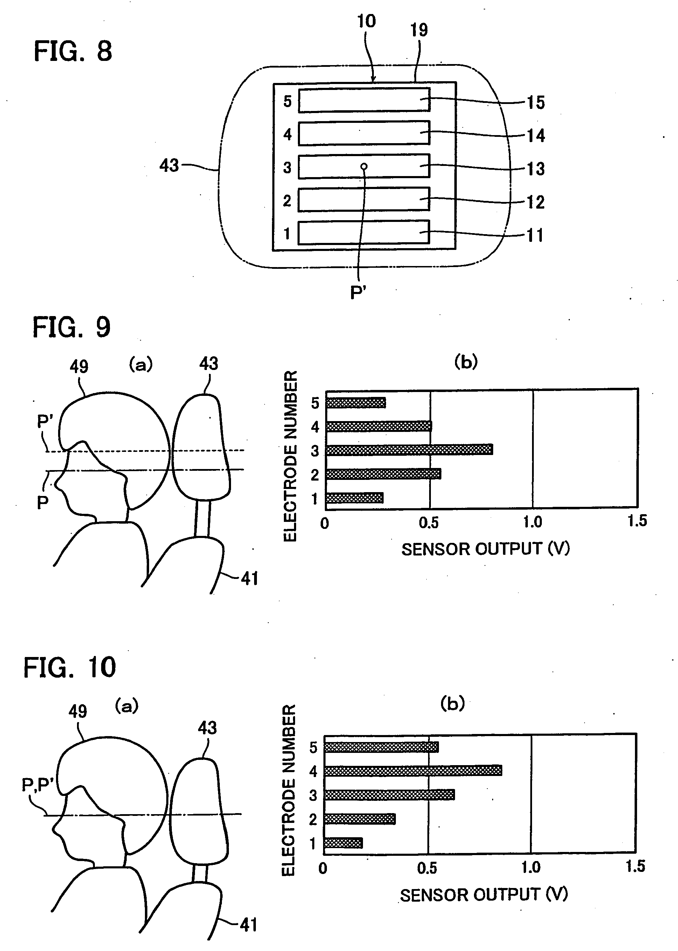

Next, an explanation will be given of a second embodiment of the present invention. FIG. 8 is an explanatory diagram showing an example arrangement of a part of a head restraint position adjusting device in a head restraint according to the second embodiment of the present invention. The head restraint position adjusting device 100 of the second embodiment has a similar configuration to that of the head restraint position adjusting device 100 of the first embodiment. That is, the head restraint position adjusting device 100 of the second embodiment comprises the capacitance sensor unit 10 and the drive motor unit 30.

As shown in FIG. 8, the detection electrodes 11 to 15 of the capacitance sensor unit 10 are each formed in a rectangular strip having a long side in a width direction intersecting with the height direction along the front face of the head restraint 43 at the front face side of the head restraint 43, and are arranged side by side in a line in such a way that the long sides of the respective detection electrodes 11 to 15 are line up along the height direction of the head restraint 43 across the entire area of the head restraint 43 in the height direction at an equal interval.

Like the first embodiment, electrode number 1 to 5 are allocated to the plural detection electrodes 11 to 15, and there are five detection electrodes in the second embodiment. Unlike the first embodiment, however, the detection electrodes are arranged by what corresponds to a fashion and a number that a detection electrode having a detected detection signal with the highest output is arranged above a center position P' of the head restraint 43 in the height direction, and for example, equal to five or greater detection electrodes are provided.

The detection circuit 20 detects a detection electrode having a detection signal with the highest output among the detection electrodes 11 to 15 based on detection signals from respective plural detection electrodes 11 to 15. The detection circuit 20 has the same configuration as that explained with reference to FIG. 3, so that explanation thereof will be omitted.

However, the difference is that the arithmetic processing circuit 28 compares values of capacitance indicated by information output by the respective capacitance detection circuits 21 to 25, detects a detection electrode having the largest detected capacitance, and outputs drive information on the head restraint 43 to the motor drive circuit of the drive motor unit 30 in accordance with the detection result. The configuration of each capacitance detection circuit 21 (22 to 25) and the operation waveform thereof are same as those explained with reference to FIGS. 4 and 5, so that explanation thereof will be omitted.

The drive motor unit 30 comprises a motor drive circuit which controls a non-illustrated drive motor based on a control signal from the arithmetic processing circuit 28 that has detected a detection electrode (hereinafter, "corresponded detection electrode") having a detection signal with the highest (largest) output among detection signals Vout from the capacitance detection circuits 21 to 25, and which causes a non-illustrated drive motor to change a position of the head restraint 43 relative to the backrest 41 of the seat 40 in such a way that the corresponded detection electrode positions above the center position P' of the head restraint 43 in the height direction, and a drive motor like the first embodiment.

As shown in FIG. 8, the center position P' of the head restraint 43 in the height direction represents a center part when the front part of the head restraint 43 is viewed from the front, but may be changed appropriately depending on the shape of the head restraint 43.

According to the head restraint position adjusting device 100 having the foregoing configuration, a capacitance C between each detection electrode 11 to 15 of the capacitance sensor unit 10 and the head 49 is detected in an initial condition like the first embodiment, and the detection circuit 20 detects and compares peaks of respective outputs one another, thereby detecting a corresponded detection electrode having the highest output. A position of the corresponded detection electrode is set to be a reference position, and position adjustment is carried out so that the reference position becomes an appropriate position of the head restraint 43 relative to the head 49 when the reference position is located above the center position P' of the head rest 43 in the height direction.

An explanation will be given of a comparative example with respect to the head restraint position adjusting device 100 of the second embodiment. Note that an explanation will be given of an output when the detection electrodes 11 to 15 are arranged across the entire area of the head restraint 43 in the height direction at an equal interval. A center position P of the head 49 is set to be a center of a line connecting a tail of an eye and a center of an ear.

According to the tests carried out by the applicant of the present invention, as shown in FIG. 9(a), when a center position P' of the head restraint 43 in the height direction is located above the center position P of the head 49, as shown in FIG. 9(b), outputs (V) of the individual detection electrodes 11 to 15 (electrode number 1 to 5) became as follow.

That is, an output of the detection electrode 13 having the electrode number 3 exceeds 0.75 V and is highest, and outputs of the detection electrodes 11, 15 having the electrode number 1, 5, respectively, are 0.25 V or so and are lowest. In this case, because the center position P of the head 49 is not coincident with the center position P' of the head restraint 43 in the horizontal direction, it is difficult to say that the position of the head restraint 43 is an appropriate position.

Conversely, as shown in FIG. 10(a), when the center position P of the head 49 and the center position P' of the head restraint 43 in the height direction are coincident with each other, in the horizontal direction, outputs (V) of the individual detection electrodes 11 to 15 (electrode number 1 to 5) became as shown in FIG. 10(b).

An output of the detection electrode 14 having the electrode number 4 exceeds 0.75 V and is highest, and, an output of the detection electrode 11 having the electrode number 1 is below 0.25 V and is lowest. At this time, because the center positions P, P' are consistent in the horizontal direction, it is possible to presume that the head restraint 43 is at an appropriate position.

The detection circuit 20 determines that a position of the head restraint 43 relative to the seat 40 (backrest 41) in this condition is appropriate, and outputs a control signal to the drive motor 30 for a position adjustment.

Therefore, the head restraint position adjusting device 100 of the second embodiment can set the center position P' of the head restraint 43 in the height direction relative to the center position P of the head 49 without performing scanning by moving the head restraint 43 in a movable range from top to bottom from an initial condition for example. Accordingly, it is possible to arrange the head restraint 43 at the best position relative to the head 49 by just one moving operation of the head restraint 43 relating to a position adjustment in one direction.

Therefore, it becomes possible to adjust a position of the head restraint 43 highly precisely within a short time. Moreover, because the head restraint 43 is automatically moved to the best position, it is possible to suppress any accident like cervical spine injury of the human body 48 when a vehicle collides under a condition in which a position of the head restraint 43 is not adjusted.

The detection circuit 20 may profile the shape of the head 49 of a driver/passenger (human body) of a vehicle using the arithmetic processing circuit 28, store an appropriate position based on the profiling result beforehand, read out the stored profile when position adjustment is started, and move the head restraint 43 in accordance with each driver/passenger, in addition to merely detecting a detection electrode having a detection electrode with the highest output and moving the head restraint 43.

Furthermore, the detection circuit 20 may move an arbitrary position of the head restraint 43 in the height direction including the center position P' to a position coincident with the center position P of the head 49 in the horizontal direction on the basis of profile information (including information on the shape of the head 49) on the human body 48 preset at the time of shipping of the head restraint position adjusting device 100 from a factory, information on the shape (size, surface contour and the like) of the head restraint 43, and the like.

Regarding a structure that the detection circuit 20 has one time-sharing circuit 26, a capacitance detection circuit 27, and an arithmetic processing circuit 28, it is same as one explained in the first embodiment with reference to FIG. 7, and there is merely a slight difference that values of capacitance are compared to detect a detection electrode having a detection electrode with the highest output, and drive information based on the detection result is output, so that detailed explanation will be omitted.

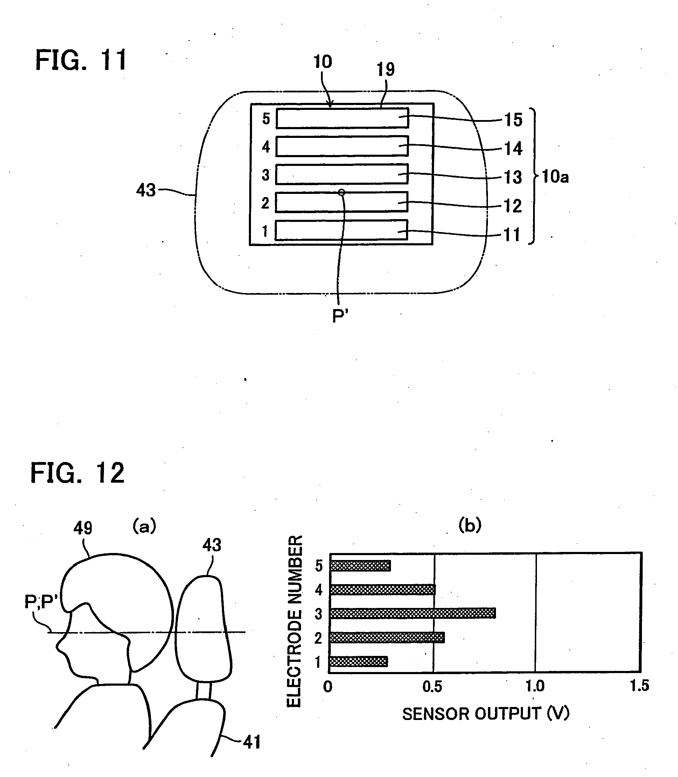

FIG. 11 is an explanatory diagram showing another example arrangement of a part of the head rest position adjusting device of the second embodiment in a head restraint, and FIG. 12 is an explanatory diagram showing an example of an output of the detection electrode of the head restraint position adjusting device. The head restraint position adjusting device of this example has the same configuration as the foregoing configuration except that arrangement of each detection electrode 11 to 15 in the capacitance sensor unit 10 differs from the capacitance sensor unit 10 of the foregoing example, so that explanation for the same configuration will be omitted.

As shown in FIG. 11, individual detection electrodes 11 to 15 are arranged in the height direction of the head restraint 43 at an equal interval, and a detection electrode group 10a comprised of the detection electrodes 11 to 15 is so arranged as to be shifted as a whole in the height direction relative to, for example, the center position P' of the head restraint 43 in the height direction so that a detection electrode (e.g., detection electrode 13) arranged in the vicinity of the center of the detection electrode group 10a in the height direction is detected by the detection circuit 20 as a corresponded detection electrode having a detection signal with the highest output.

Accordingly, as shown in FIG. 12(a), for example, when the center position P of the head 49 is coincident with the center position P' of the head restraint 43 in the height direction, an output (V) of each detection electrode 11 to 15 (electrode number 1 to 5) becomes as shown in FIG. 12(b).

That is, an output of the detection electrode 13 having the electrode number 3 exceeds 0.75 V and is highest, and outputs of the detection electrodes 11,15 having the electrode number 1, 5, respectively, are 0.25 V or so and are lowest. At this time, because the center positions P, P' are coincident with each other in the horizontal direction, like the foregoing example in the second embodiment, it is possible to presume that the head restraint 43 is at an appropriate position, and the detection circuit 20 determines that a position of the head restraint 43 relative to the seat 40 (backrest 41) in this condition is appropriate, and outputs a control signal to the drive motor 30 for a position adjustment.

As explained above, according to the head restraint position adjusting device of the second embodiment, it is possible to set the center position P' in the height direction relative to the center position P of the head 49 without performing scanning by moving the head restraint 43 in a movable range from top to bottom from an initial condition for example, and to arrange the head restraint 43 at the best position relative to the head 49 by just one moving operation of the head restraint 43 relating to a position adjustment in one direction, so that it becomes possible to adjust a position of the head restraint 43 highly precisely within a short time. Moreover, because the head restraint 43 is automatically moved to the best position, it is possible to suppress any accident like cervical spine injury of the human body 48 when a vehicle collides under a condition in which a position of the head restraint 43 is not adjusted.

Although the explanation has been given of the case where the head restraint position adjusting device is applied to the head restraint 43 of the seat 40 of a vehicle in the first and second embodiments, the head restraint position adjusting device 100 can be applied to, for example, a set for an amusement attraction and a seat for theatrical appreciation which can change a position of a head restraint.

### Industrial Applicability

The present invention is useful for carrying out position adjustment highly precisely within a short time by a device for a seat of a vehicle or the like which adjusts a position of a head restraint

### Brief Description of Drawings

FIG. 1 is a schematic diagram showing an example of a seat in a vehicle provided with a head restraint position adjusting device according to a first embodiment of the present invention;
FIG. 2 is an explanatory diagram showing an example arrangement of a part of the head restraint position adjusting device in a head restraint;
FIG. 3 is a block diagram showing an example of a whole configuration of the head restraint position adjusting device;
FIG. 4 is a block diagram showing an example configuration of a capacitance detection circuit of the head restraint position adjusting device;
FIG. 5 is an operation waveform chart showing an example of an operation waveform of a detection circuit of the head restraint position adjusting device;
FIG. 6 is an explanatory diagram showing an example of an output of a detection electrode of the head restraint position adjusting device;
FIG. 7 is a block diagram showing another example of a whole configuration of the head restraint position adjusting device according to the first embodiment of the present invention;
FIG. 8 is an explanatory diagram showing an example arrangement of a part of a head restraint position adjusting device in a head restraint according to a second embodiment of the present invention;
FIG. 9 is an explanatory diagram showing a comparative example of an output of a detection electrode of the head restraint position adjusting device;
FIG. 10 is an explanatory diagram showing an example of an output of the detection electrode of the head restraint position adjusting device;
FIG. 11 is an explanatory diagram showing another example arrangement of a part of the head rest position adjusting device in a head restraint;
FIG. 12 is an explanatory diagram showing an example of an output of the detection electrode of the head restraint position adjusting device; and
FIG. 13 is a diagram showing a detection result of a sensor output in a test carried out by the applicant of the present invention.

### Description of Reference Numerals

- 10: Capacitance sensor unit
- 10a: Detection electrode group
- 11 to 15: Detection electrode
- 19: Board
- 20: Detection circuit
- 21 to 25, 27: Capacitance detection circuit
- 26: Time-sharing circuit
- 28: Arithmetic processing circuit
- 29: Harness
- 30: Drive motor unit
- 40: Seat
- 41: Backrest
- 42: Seating portion
- 43: Head restraint
- 43a: Support axis
- 48: Human body
- 49: Head

## Claims

1. A head restraint position adjusting device (100) comprising:
a plurality of detection electrodes (11-15) arranged side by side in a line along a height direction of a head restraint (43) attached to a seat (42) of a vehicle, and each configured to output information as a detection signal;
a detection circuit (20) configured to detect a reference position of the head (49) in the height direction based on the detection signals from the plurality of respective detection electrodes (11-15); and
position adjusting means (30) for adjusting a position of the head restraint (43) relative to the seat (42) with reference to the detected reference position of the head (49) in the height direction in accordance with a detection result of the detection circuit (20), and
the plurality of detection electrodes (11-15) being provided by what corresponds to a number required for detecting the reference position of the head (49) in the height direction with the head restraint (43) being at a standstill,
**characterized by**
the information output by each detection electrode (11;12;13;14;15) indicating a capacitance and the detection circuit (20) being configured to detect capacitances between a head (49) of a human body (48) sitting down the seat (42) and each of the detection electrodes (11-15) based on each detection signal.

2. The head restraint position adjusting device (100) according to claim 1,
wherein
the detection circuit (20) detects an estimated center position (P) of the head (49) in the height direction as the reference position, and
the position adjusting means (30) adjusts a position of the head restraint (43) relative to the seat (42) with reference to the estimated center position (P) of the head (49) in the height direction.

3. The head restraint position adjusting device (100) according to claim 1,
wherein
the detection circuit detects (20), as the reference position, the detection electrode (11;12;13;14;15) having a detection signal with the highest output among the plurality of detection electrodes (11-15), and
the position adjusting means (30) adjusts a position of the head restraint (43) relative to the seat (42) so that the detection electrode (11;12;13;14;15) having the detection signal with the highest output and detected by the detection circuit (20) is located above a center position (P') of the head restraint (43) in the height direction.

4. The head restraint position adjusting device (100) according to claim 1 or 2, wherein the plurality of detection electrodes (11-15) are each formed in a rectangular strip having a long side arranged in a width direction intersecting with the height direction of the head restraint (43) at a front face side of the head restraint (43).

5. The head restraint position adjusting device (100) according to claim 1 or 3, wherein the plurality of detection electrodes (11-15) are arranged across the entire area of the head restraint (43) in the height direction at an equal interval.

6. The head restraint position adjusting device (100) according to claim 1 or 3, wherein the plurality of detection electrodes (11-15) are arranged in the height direction of the head restraint (43) at an equal interval, and a detection electrode group (10a) comprised of the plurality of detection electrodes (11-15) is so arranged as to be shifted as a whole in the height direction so that the detection electrode (11;12;13;14;15) arranged in the vicinity of a center of the detection electrode group (10a) in the height direction is detected by the detection circuit (20) as the detection electrode (11;12;13;14;15) having a detection signal with the highest output.

7. The head restraint position adjusting device (100) according to claim 1, 3, 5, or 6, wherein the plurality of detection electrodes (11-15) are each formed in a rectangular strip having a long side in a width direction intersecting with the height direction of the head restraint (43) along a front face thereof, and are arranged on the front face side of the head restraint (43).

8. The head restraint position adjusting device (100) according to any one of claims 1 to 7, wherein at least five detection electrodes (11-15) are provided on a front face side of the head restraint (43).

9. The head restraint position adjusting device (100) according to any one of claims 1 to 8, wherein the detection circuit (20) comprises:
a plurality of capacitance detection circuits (21-25) connected to the plurality of respective detection electrodes (11-15) one by one, and each configured to output information indicating a capacitance detected by each detection electrode; and
an arithmetic processing circuit (28) configured to compare values of capacitance based on plural pieces of information from the plurality of respective capacitance detection circuits (21-25), calculate the reference position or detect the detection electrode (11;12;13;14;15) having the largest detected capacitance, and output drive information for the head restraint (43) to the position adjusting means (30) in accordance with calculation result information or a detection result.

10. The head restraint position adjusting device (100) according to any one of claims 1 to 8, wherein the detection circuit (20) comprises:
a time-sharing circuit (26) connected to the plurality of detection electrodes (11-15);
a capacitance detection circuit (27) configured to output information indicating a capacitance detected by each of the plurality of detection electrodes (11-15) through the time-sharing circuit (26) in a different time; and
an arithmetic processing (28) circuit configured to compare values of capacitance based on plural pieces of information from the capacitance detection circuit (27), calculate the reference position or detect the detection electrode (11;12;13;14;15) having the largest detected capacitance, and output drive information for the head restraint (43) to the position adjusting means (30) in accordance with calculation result information or a detection result.

11. A head restraint position adjusting method comprising:
detecting a capacitance between a head (49) of a human body (48) sitting down a seat (42) of a vehicle and a head restraint (43) attached to the seat (42) through a plurality of detection electrodes (11-15) arranged side by side in a line in the head restraint (43) along a height direction of the head restraint (43), the plurality of detection electrodes (11-15) being provided by what corresponds to a number required for detecting a reference position of the head (49) of the human body (48) sitting down the seat in the height direction with the head restraint (43) being at a standstill;
detecting the reference position of the head (49) in the height direction based on detection signals each indicating a detected capacitance and output by each of the plurality of detection electrodes (11-15); and
adjusting a position of the head restraint (43) relative to the seat with reference to the detected reference position of the head (49) in the height direction.

12. The head restraint position adjusting method according to claim 11, further comprising:
detecting an estimated center position (P) of the head (49) in the height direction as the reference position based on the detection signals; and
adjusting a position of the head restraint (43) relative to the seat (42) with reference to the detected estimated center position (P) of the head (49) in the height direction.

13. The head restraint position adjusting method according to claim 11, further comprising:
detecting the detection electrode (11;12;13;14;15) having the detection signal with the highest output among the plurality of detection electrodes (11-15) based on the detection signals; and
adjusting a position of the head restraint (43) relative to the seat (42) so that the detected detection electrode (11;12;13;14;15) having the detection signal with the highest output is located above a center position (P') of the head restraint (43) in the height direction.

14. The head restraint position adjusting method according to claim 11 or 12, wherein the plurality of detection electrodes (11-15) are each formed in a rectangular strip having a long side arranged in a width direction intersecting with the height direction of the head restraint (43) at a front face side of the head restraint (43).

15. The head restraint position adjusting method according to claim 11 or 13, wherein the plurality of detection electrodes (11-15) are arranged across an entire area of the head restraint (43) in the height direction.

16. The head restraint position adjusting method according to claim 11 or 13, wherein the plurality of detection electrodes (11-15) are arranged in the height direction of the head restraint (43) at an equal interval, and a detection electrode group (10a) comprised of the plurality of detection electrodes (11-15) is so arranged as to be shifted as a whole in the height direction so that the detection electrode (11;12;13;14;15) arranged in the vicinity of a center of the detection electrode group (10a) in the height direction is detected by the detection circuit (20) as the detection electrode (11;12;13;14;15) having a detection signal with the highest output.

17. The head restraint position adjusting method according to claim 11, 13, 15, or 16, wherein the plurality of detection electrodes (11-15) are each formed in a rectangular strip having a long side in a width direction intersecting with the height direction of the head restraint (43) along a front face thereof, and are arranged on the front face side of the head restraint (43).

## Patentansprüche

1. Vorrichtung (100) zum Anpassen einer Kopfstützen-Position, die umfasst:
eine Vielzahl von Erfassungselektroden (11-15), die nebeneinander in einer Linie entlang einer Höhenrichtung einer an einem Sitz (42) eines Fahrzeugs angebrachten Kopfstütze (43) angeordnet und jeweils so konfiguriert sind, dass jede Information als ein Erfassungssignal ausgibt;
eine Erfassungsschaltung (20), die so konfiguriert ist, dass sie eine Bezugsposition des Kopfes (49) in der Höhenrichtung auf Basis der Erfassungssignale von der Vielzahl jeweiliger Erfassungselektroden (11-15) erfasst; und
eine Positions-Anpassungseinrichtung (30) zum Anpassen einer Position der Kopfstütze (43) relativ zu dem Sitz (42) unter Bezugnahme auf die erfasste Bezugsposition des Kopfes (49) in der Höhenrichtung gemäß einem Erfassungsergebnis der Erfassungsschaltung (20), und
wobei die Vielzahl von Erfassungselektroden (11-15) in einer Anzahl vorhanden ist, die erforderlich ist, um die Bezugsposition des Kopfes (49) in der Höhenrichtung zu erfassen, wenn sich die Kopfstütze (43) im Stillstand befindet,
**dadurch gekennzeichnet, dass**
die durch jede Erfassungselektrode (11; 12; 13; 14; 15) ausgegebene Information eine Kapazität abzeigt und die Erfassungsschaltung (20) so konfiguriert ist, dass sie Kapazitäten zwischen einem Kopf (49) eines auf dem Sitz (42) sitzenden menschlichen Körpers (48) und jeder der Erfassungselektroden (11-15) auf Basis jedes Erfassungssignals erfasst.

2. Vorrichtung (100) zum Anpassen einer Kopfstützenposition nach Anspruch 1, wobei die Erfassungsschaltung (20) eine geschätzte Mittelposition (P) des Kopfes (49) in der Höhenrichtung als die Bezugsposition erfasst, und
die Positions-Anpassungseinrichtung (30) eine Position der Kopfstütze (43) relativ zu dem Sitz (42) unter Bezugnahme auf die geschätzte Mittelposition (P) des Kopfes (49) in der Höhenrichtung anpasst.

3. Vorrichtung (100) zum Anpassen einer Kopfstützen-Position nach Anspruch 1, wobei die Erfassungsschaltung (20) als die Bezugsposition die Erfassungselektrode (11; 12; 13; 14; 15) erfasst, die von der Vielzahl von Erfassungselektroden (11-15) ein Erfassungssignal mit dem höchsten Ausgang hat, und
die Positions-Anpassungseinrichtung (30) eine Position der Kopfstütze (43) relativ zu dem Sitz (42) so anpasst, dass sich die Erfassungselektrode (11; 12; 13; 14; 15), die das Erfassungssignal mit dem höchsten Ausgang hat und durch die Erfassungsschaltung (20) erfasst wird, oberhalb einer Mittelposition (P') der Kopfstütze (43) in der Höhenrichtung befindet.

4. Vorrichtung (100) zum Anpassen einer Kopfstützen-Position nach Anspruch 1 oder 2, wobei die Vielzahl von Erfassungselektroden (11-15) jeweils in einem rechteckigen Streifen, dessen lange Seite in einer Breitenrichtung angeordnet ist, die die Höhenrichtung der Kopfstütze (43) schneidet, an einer Vorderseite der Kopfstütze (43) ausgebildet sind.

5. Vorrichtung (100) zum Anpassen einer Kopfstützen-Position nach Anspruch 1 oder 3, wobei die Vielzahl von Erfassungselektroden (11-15) über die gesamte Fläche der Kopfstütze (43) in der Höhenrichtung in einem gleichmäßigen Intervall angeordnet sind.

6. Vorrichtung (100) zum Anpassen einer Kopfstützen-Position nach Anspruch 1 oder 3, wobei die Vielzahl von Erfassungselektroden (11-15) in der Höhenrichtung der Kopfstütze (43) in einem gleichmäßigen Intervall angeordnet sind, und eine Erfassungselektroden-Gruppe (10a), die aus der Vielzahl von Erfassungselektroden (11-15) besteht, so angeordnet ist, dass sie als Ganzes in der Höhenrichtung so verschoben ist, dass die Erfassungselektrode (11; 12; 13; 14; 15), die in der Nähe einer Mitte der Erfassungselektroden-Gruppe (10a) in der Höhenrichtung angeordnet ist, durch die Erfassungsschaltung (20) als die Erfassungselektrode (11; 12; 13; 14; 15) erfasst wird, die ein Erfassungssignal mit dem höchsten Ausgang hat.

7. Vorrichtung (100) zum Anpassen einer Kopfstützen-Position nach Anspruch 1, 3, 5 oder 6, wobei die Vielzahl von Erfassungselektroden (11-15) jeweils in einem rechteckigen Steifen, dessen lange Seite in einer Breitenrichtung angeordnet ist, die die Höhenrichtung der Kopfstütze (43) schneidet, entlang einer vorderen Fläche derselben ausgebildet sind und an der Seite der vorderen Fläche der Kopfstütze (43) angeordnet sind.

8. Vorrichtung (100) zum Anpassen einer Kopfstützen-Position nach einem der Ansprüche 1 bis 7, wobei wenigstens fünf Erfassungselektroden (11-15) an einer Seite der vorderen Fläche der Kopfstütze (43) vorhanden sind.

9. Vorrichtung (100) zum Anpassen einer Kopfstützen-Position nach einem der Ansprüche 1 bis 8, wobei die Erfassungsschaltung (20) umfasst:
eine Vielzahl von Kapazität-Erfassungsschaltungen (21-25), die einzeln mit der Vielzahl entsprechender Erfassungselektroden (11-15) verbunden und jeweils so konfiguriert sind, dass sie Informationen ausgeben, die eine durch jede Erfassungselektrode erfasste Kapazität anzeigen; und
eine Arithmetik-Verarbeitungsschaltung (28), die so konfiguriert ist, dass sie Werte der Kapazität auf Basis mehrerer Informationselemente von der Vielzahl entsprechender Kapazitäts-Erfassungsschaltungen (21-25) vergleicht, die Bezugsposition berechnet oder die Erfassungselektrode (11; 12; 13; 14; 15) mit der höchsten erfassten Kapazität erfasst und gemäß Berechnungsergebnis-Informationen oder einem Erfassungsergebnis Antriebs-Informationen für die Kopfstütze (43) an die Positions-Anpassungseinrichtung (30) ausgibt.

10. Vorrichtung (100) zum Anpassen einer Kopfstützen-Position nach einem der Ansprüche 1 bis 8, wobei die Erfassungsschaltung (20) umfasst:
eine Zeitteilungs-Schaltung (26), die mit der Vielzahl von Erfassungselektroden (11-15) verbunden ist;
eine Kapazitäts-Erfassungsschaltung (27), die so konfiguriert ist, dass sie Informationen, die jeweils die durch eine jede der Vielzahl von Erfassungselektroden (11-15) erfasste Kapazität anzeigt, über die Zeitteilungs-Schaltung (26) zu verschiedenen Zeiten ausgibt; und
eine Arithmetik-Verarbeitungsschaltung (28), die so konfiguriert ist, dass sie Werte der Kapazität auf Basis mehrerer Informationselemente von der Kapazitäts-Erfassungsschaltung (27) vergleicht, die Bezugsposition berechnet oder die Erfassungselektrode (11; 12; 13; 14; 15) mit der höchsten erfassten Kapazität erfasst und gemäß Berechnungsergebnis-Informationen oder einem Erfassungsergebnis Antriebs-Informationen für die Kopfstütze (43) an die Positions-Anpassungseinrichtung (30) ausgibt.

11. Verfahren zum Anpassen einer Kopfstützen-Position, das umfasst:
Erfassen einer Kapazität zwischen einem Kopf (49) eines auf einem Sitz (42) eines Fahrzeugs sitzenden menschlichen Körpers (48) und einer an dem Sitz (42) angebrachten Kopfstütze (43) über eine Vielzahl von Erfassungselektroden (11-15), die nebeneinander in einer Linie in der Kopfstütze (43) entlang einer Höhenrichtung der Kopfstütze (43) angeordnet sind, wobei die Vielzahl von Erfassungselektroden (11-15) in einer Anzahl vorhanden sind, die erforderlich ist, um eine Bezugsposition des Kopfes (49) des auf dem Sitz sitzenden menschlichen Körpers (48) in der Höhenrichtung zu erfassen, wenn sich die Kopfstütze (43) im Stillstand befindet;
Erfassen der Bezugsposition des Kopfes (49) in der Höhenrichtung auf Basis von Erfassungssignalen, die jeweils eine erfasste Kapazität anzeigen und durch jede der Vielzahl von Erfassungselektroden (11-15) ausgegeben werden; und
Anpassen einer Position der Kopfstütze (43) relativ zu dem Sitz unter Bezugnahme auf die erfasste Bezugsposition des Kopfes (49) in der Höhenrichtung.

12. Verfahren zum Anpassen einer Kopfstützen-Position nach Anspruch 11, das des Weiteren umfasst:
Erfassen einer geschätzten Mittelposition des Kopfes (49) in der Höhenrichtung als die Bezugsposition auf Basis der Erfassungssignale; und
Anpassen einer Position der Kopfstütze (43) relativ zu dem Sitz (42) unter Bezugnahme auf die erfasste geschätzte Mittelposition (P) des Kopfes (49) in der Höhenrichtung.

13. Verfahren zum Anpassen einer Kopfstützen-Position nach Anspruch 11, das des Weiteren umfasst:
Erfassen der Erfassungselektrode (11; 12; 13; 14; 15), die von der Vielzahl von Erfassungselektroden (11-15) das Erfassungssignal mit dem höchsten Ausgang hat, auf Basis der Erfassungssignale; und
Anpassen einer Position der Kopfstütze (43) relativ zu dem Sitz (42), so dass sich die erfasste Erfassungselektrode (11; 12; 13; 14; 15), die das Erfassungssignal mit dem höchsten Ausgang hat, oberhalb einer Mittelposition (P') der Kopfstütze (43) in der Höhenrichtung befindet.

14. Verfahren zum Anpassen einer Kopfstützen-Position nach Anspruch 11 oder 12, wobei die Vielzahl von Erfassungselektroden (11-15) jeweils in einem rechteckigen Streifen, dessen lange Seite in einer Breitenrichtung angeordnet ist, die die Höhenrichtung der Kopfstütze (43) schneidet, an einer Vorderseite der Kopfstütze (43) ausgebildet sind.

15. Verfahren zum Anpassen einer Kopfstützen-Position nach Anspruch 11 oder 13, wobei die Vielzahl von Erfassungselektroden (11-15) über die gesamte Fläche der Kopfstütze (43) in der Höhenrichtung in einem gleichmäßigen Intervall angeordnet sind.

16. Verfahren zum Anpassen einer Kopfstützen-Position nach Anspruch 11 oder 13, wobei die Vielzahl von Erfassungselektroden (11-15) in der Höhenrichtung der Kopfstütze (43) in einem gleichmäßigen Intervall angeordnet sind, und eine Erfassungselektroden-Gruppe (10a), die aus der Vielzahl von Erfassungselektroden (11-15) besteht, so angeordnet ist, dass sie als Ganzes in der Höhenrichtung so verschoben ist, dass die Erfassungselektrode (11; 12; 13; 14; 15), die in der Nähe einer Mitte der Erfassungselektroden-Gruppe (10a) in der Höhenrichtung angeordnet ist, durch die Erfassungsschaltung (20) als die Erfassungselektrode (11; 12; 13; 14; 15) erfasst wird, die ein Erfassungssignal mit dem höchsten Ausgang hat.

17. Verfahren zum Anpassen einer Kopfstützen-Position nach Anspruch 11, 13, 15 oder 16, wobei die Vielzahl von Erfassungselektroden (11-15) jeweils in einem rechteckigen Steifen, dessen lange Seite in einer Breitenrichtung angeordnet ist, die die Höhenrichtung der Kopfstütze (43) schneidet, entlang einer vorderen Fläche derselben ausgebildet sind und an der Seite der vorderen Fläche der Kopfstütze (43) angeordnet sind.

## Revendications

1. Dispositif de réglage de position d'appui-tête (100) comprenant :
une pluralité d'électrodes de détection (11 à 15) agencées côte à côte en ligne le long d'un sens de la hauteur d'un appui-tête (43) fixé à un siège (42) d'un véhicule, et chacune étant configurée pour fournir en sortie des informations en tant que signal de détection ;
un circuit de détection (20) configuré pour détecter une position de référence de la tête (49) dans le sens de la hauteur d'après les signaux de détection provenant de la pluralité d'électrodes de détection (11 à 15) respectives ; et
un moyen de réglage de position (30) permettant de régler une position de l'appui-tête (43) par rapport au siège (42) en référence à la position de référence détectée de la tête (49) dans le sens de la hauteur en conformité avec un résultat de détection du circuit de détection (20),et
la pluralité d'électrodes de détection (11 à 15) étant prévues selon ce qui correspond à un nombre nécessaire pour détecter la position de référence de la tête (49) dans le sens de la hauteur, l'appui-tête (43) étant immobilisé,
**caractérisé en ce que**
les informations fournies en sortie par chaque électrode de détection (11 ; 12 ; 13 ; 14 ; 15) indiquent une capacité et le circuit de détection (20) est configuré pour détecter des capacités entre une tête (49) d'un corps humain (48) s'asseyant sur le siège (42) et chacune des électrodes de détection (11 à 15) d'après chaque signal de détection.

2. Dispositif de réglage de position d'appui-tête (100) selon la revendication 1, dans lequel
le circuit de détection (20) détecte une position de centre estimée (P) de la tête (49) dans le sens de la hauteur en tant que position de référence, et
le moyen de réglage de position (30) règle une position d'appui-tête (43) par rapport au siège (42) en référence à la position de centre estimée (P) de la tête (49) dans le sens de la hauteur.

3. Dispositif de réglage de position d'appui-tête (100) selon la revendication 1, dans lequel
le circuit de détection (20) détecte, en tant que position de référence, l'électrode de détection (11 ; 12 ; 13 ; 14 ; 15) ayant un signal de détection avec la sortie la plus élevée parmi la pluralité d'électrodes de détection (11 à 15), et
le moyen de réglage de position (30) règle une position de l'appui-tête (43) par rapport au siège (42), de sorte que l'électrode de détection (11 ; 12 ; 13 ; 14 ; 15) ayant le signal de détection avec la sortie la plus élevée et détecté par le circuit de détection (20) est située au-dessus d'une position de centre (P') de l'appui-tête (43) dans le sens de la hauteur.

4. Dispositif de réglage de position d'appui-tête (100) selon la revendication 1 ou 2, dans lequel la pluralité d'électrodes de détection (11 à 15) sont chacune formées en une bande rectangulaire ayant un long côté agencé dans un sens de la largeur coupant le sens de la hauteur de l'appui-tête (43) du côté de la face avant de l'appui-tête (43).

5. Dispositif de réglage de position d'appui-tête (100) selon la revendication 1 ou 3, dans lequel la pluralité d'électrodes de détection (11 à 15) sont agencées sur toute la surface de l'appui-tête (43) dans le sens de la hauteur à un intervalle égal.

6. Dispositif de réglage de position d'appui-tête (100) selon la revendication 1 ou 3, dans lequel la pluralité d'électrodes de détection (11 à 15) sont agencées dans le sens de la hauteur de l'appui-tête (43) à un intervalle égal, et un groupe d'électrodes de détection (10a) composé de la pluralité d'électrodes de détection (11 à 15) est agencé de sorte à être décalé dans son ensemble dans le sens de la hauteur, si bien que l'électrode de détection (11 ; 12 ; 13 ; 14 ; 15) agencée au voisinage d'un centre du groupe d'électrodes de détection (10a) dans le sens de la hauteur est détectée par le circuit de détection (20) en tant qu'électrode de détection (11 ; 12 ; 13 ; 14 ; 15) ayant un signal de détection avec la sortie la plus élevée.

7. Dispositif de réglage de position d'appui-tête (100) selon la revendication 1, 3, 5 ou 6, dans lequel la pluralité d'électrodes de détection (11 à 15) sont formées en une bande rectangulaire ayant un long côté dans un sens de la largeur coupant le sens de la hauteur de l'appui-tête (43) le long de sa face avant, et sont agencées du côté de la face avant de l'appui-tête (43).

8. Dispositif de réglage de position d'appui-tête (100) selon l'une quelconque des revendications 1 à 7, dans lequel au moins cinq électrodes de détection (11 à 15) sont fournies d'un côté de la face avant de l'appui-tête (43).

9. Dispositif de réglage de position d'appui-tête (100) selon l'une quelconque des revendications 1 à 8, dans lequel le circuit de détection (20) comprend :
une pluralité de circuits de détection de capacité (21 à 25) connectés à la pluralité d'électrodes de détection (11 à 15) respectives un par un, et chacun étant configuré pour fournir en sortie des informations indiquant une capacité détectée par chaque électrode de détection ; et
un circuit de traitement arithmétique (28) configuré pour comparer des valeurs de capacité d'après plusieurs informations provenant de la pluralité de circuits de détection de capacité (21 à 25) respectifs, pour calculer la position de référence ou détecter l'électrode de détection (11 ; 12 ; 13 ; 14 ; 15) ayant la plus importante capacité détectée, et pour fournir en sortie des informations de commande pour l'appui-tête (43) au moyen de réglage de position (30) en conformité avec des informations de résultat de calcul ou un résultat de détection.

10. Dispositif de réglage de position d'appui-tête (100) selon l'une quelconque des revendications 1 à 8, dans lequel le circuit de détection (20) comprend :
un circuit en temps partagé (26) connecté à la pluralité d'électrodes de détection (11 à 15) ;
un circuit de détection de capacité (27) configuré pour fournir en sortie des informations indiquant une capacité détectée par chacune de la pluralité d'électrodes de détection (11 à 15) par l'intermédiaire du circuit en temps partagé (26) à un moment différent ; et
un circuit de traitement arithmétique (28) configuré pour comparer les valeurs de capacité d'après plusieurs informations provenant du circuit de détection de capacité (27), pour calculer la position de référence ou détecter l'électrode de détection (11 ; 12 ; 13 ; 14 ; 15) ayant la plus importante capacité détectée, et pour fournir en sortie des informations de commande pour l'appui-tête (43) au moyen de réglage de position (30) en conformité avec des informations de résultat de calcul ou un résultat de détection.

11. Procédé de réglage de position d'appui-tête comprenant :
la détection d'une capacité entre une tête (49) d'un corps humain (48) s'asseyant sur un siège (42) d'un véhicule et un appui-tête (43) fixé au siège (42) par l'intermédiaire d'une pluralité d'électrodes de détection (11 à 15) agencées côte à côte en ligne dans l'appui-tête (43) le long d'un sens de la hauteur de l'appui-tête (43), la pluralité d'électrodes de détection (11 à 15) étant fournies selon ce qui correspond à un nombre nécessaire pour détecter une position de référence de la tête (49) du corps humain (48) s'asseyant sur le siège dans le sens de la hauteur, l'appui-tête (43) étant immobilisé ;
la détection de position de référence de la tête (49) dans le sens de la hauteur d'après les signaux de détection indiquant chacun une capacité détectée et fournis en sortie par chacune de la pluralité d'électrodes de détection (11 à 15) ; et
le réglage d'une position de l'appui-tête (43) par rapport au siège en référence à la position de référence détectée de la tête (49) dans le sens de la hauteur.

12. Procédé de réglage de position d'appui-tête selon la revendication 11, comprenant en outre :
la détection d'une position de centre estimée (P) de la tête (49) dans le sens de la hauteur en tant que position de référence d'après les signaux de détection ; et
le réglage d'une position de l'appui-tête (43) par rapport au siège (42) en référence à la position de centre estimée (P) détectée de la tête (49) dans le sens de la hauteur.

13. Procédé de réglage de position d'appui-tête selon la revendication 11, comprenant en outre :
la détection de l'électrode de détection (11 ; 12 ; 13 ; 14 ; 15) ayant le signal de détection avec la sortie la plus élevée parmi la pluralité d'électrodes de détection (11 à 15) d'après les signaux de détection ; et
le réglage d'une position de l'appui-tête (43) par rapport au siège (42) de sorte que l'électrode de détection (11 ; 12 ; 13 ; 14 ; 15) détectée ayant le signal de détection avec la sortie la plus élevée est située au-dessus d'une position de centre (P') de l'appui-tête (43) dans le sens de la hauteur.

14. Procédé de réglage de position d'appui-tête selon la revendication 11 ou 12, dans lequel la pluralité d'électrodes de détection (11 à 15) sont formées en une bande rectangulaire ayant un côté long agencé dans un sens de la largeur coupant le sens de la hauteur de l'appui-tête (43) d'un côté de la face avant de l'appui-tête (43).

15. Procédé de réglage de position d'appui-tête selon la revendication 11 ou 13, dans lequel la pluralité d'électrodes de détection (11 à 15) sont agencées sur toute la surface de l'appui-tête (43) dans le sens de la hauteur.

16. Procédé de réglage de position d'appui-tête selon la revendication 11 ou 13, dans lequel la pluralité d'électrodes de détection (11 à 15) est agencée dans le sens de la hauteur de l'appui-tête (43) à un intervalle égal, et un groupe d'électrodes de détection (10a) composé de la pluralité d'électrodes de détection (11 à 15) est agencé de sorte à être décalé dans son ensemble dans le sens de la hauteur, si bien que l'électrode de détection (11 ; 12 ; 13 ; 14 ; 15) agencée au voisinage d'un centre du groupe d'électrodes de détection (10a) dans le sens de la hauteur est détectée par le circuit de détection (20) en tant qu'électrode de détection (11 ; 12 ; 13 ; 14 ; 15) ayant un signal de détection avec la sortie la plus élevée.

17. Procédé de réglage de position d'appui-tête selon la revendication 11, 13, 15 ou 16, dans lequel la pluralité d'électrodes de détection (11 à 15) sont chacune formées en une bande rectangulaire, ayant un long côté dans un sens de la largeur coupant le sens de la hauteur de l'appui-tête (43) le long de sa face avant, et sont agencées du côté de la face avant de l'appui-tête (43).
